# EUROPEAN PATENT APPLICATION

(11) **EP 4 715 437 A1**
(43) Date of publication of application: **25.03.2026**
(21) Application number: 25190324.1
(22) Date of filing: 17.07.2025
(51) Int. Cl.: G02B 6/44, G02B 6/46

(54) **MANIFOLD FOR CONNECTING CORRUGATED CONDUIT**

(30) Priority: 19.09.2024 US 202418890160
(71) Applicant: The Boeing Company, Arlington, VA 22202 (US)
(72) Inventor: CHASE, Armstrong, Arlington, 22202 (US); DAVIS, James L., Arlington, 22202 (US)
(74) Representative: Bryn-Jacobsen, Caelia

(57) **Abstract**

Manifolds and methods of connecting corrugated conduits are presented. A manifold to connect corrugated conduits is presented. The manifold comprises a first half, a second half removably connected to the first half to form a volume within the manifold, a first number of openings on a first end to access the volume, and a second number of openings on a second end to access the volume. Removing the first half from the second half cleaves each of the first number of openings and each of the second number of openings.

## Description

### CROSS-REFERENCE TO RELATED APPLICATION

This application is related to the following U.S. Patent Application entitled "Manifold for connecting corrugated conduit," Serial No. 18/890160, filed 19 September 2024.

### BACKGROUND INFORMATION

### 1. Field:

The present disclosure relates generally to wires and fibers and more specifically to conduits for running wires and fibers.

### 2. Background:

Wire assemblies and fiber optic assemblies are used to deliver electricity and data in platforms. The wire assemblies can include long stretches of tubing arranged in branches and connections between the branches.

Wire assembly uses multiple fabricators and labor hours to twist long stretches (30ft +/-) of tubing for installing each branch for initial fabrication. Current designs are disassembled entirely to add or modify tubing count or size. Modifying or repairing fiber cable assemblies using current fabrication techniques can involve undesirable amounts of time and resources due to the complete disassembly from connectors to current manifolds.

Therefore, it would be desirable to have a method and apparatus that takes into account at least some of the issues discussed above, as well as other possible issues. For example, it would be desirable to have a method and apparatus to enable repair or redesign of a fiber or wire assembly without complete disassembly.

### SUMMARY

An example of the present disclosure provides a manifold to connect corrugated conduits. The manifold comprises a first half, a second half removably connected to the first half to form a volume within the manifold, a first number of openings on a first end to access the volume, and a second number of openings on a second end to access the volume. Removing the first half from the second half cleaves each of the first number of openings and each of the second number of openings.

Another example of the present disclosure provides a fiber management system. The fiber management system comprises a manifold, a first number of corrugated conduits, a second number of corrugated conduits, a first number of adapters connecting the first number of corrugated conduits to a first end of the manifold, and a second number of adapters connecting the second number of corrugated conduits to a second end of the manifold.

Another example of the present disclosure provides a method of managing fibers. A first half of a manifold is separated from a second half of a manifold to cleave each of a first number of openings on a first end of the manifold and each of a second number of openings on a second end of the manifold to provide access to fibers within a volume of the manifold and extending through one of the first number of openings or the second number of openings to corrugated conduits joined by the manifold.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives, and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of fibers extending through corrugated conduits and manifolds in accordance with an illustrative example;
**Figure 4** is an illustration of an isometric view of a manifold and adapters in accordance with an illustrative example;
**Figure 5** is an illustration of a partially exploded side view of a manifold and adapters in accordance with an illustrative example;
**Figure 6** is an illustration of an exploded isometric view of a manifold and adapters in accordance with an illustrative example;
**Figure 7** is an illustration of a side view of multiple adapters in accordance with an illustrative example;
**Figure 8** is an illustration of a bottom view of a manifold with anti-rotation features in accordance with an illustrative example;
**Figure 9** is an illustration of an exploded isometric view of a manifold and adapters in accordance with an illustrative example;
**Figure 10** is an illustration of a side view of a fastener prior to installation as a captive fastener in accordance with an illustrative example;
**Figure 11** is an illustration of a cross-sectional view of a fastener prior to installation as a captive fastener in a channel in accordance with an illustrative example;
**Figure 12** is an illustration of a cross-sectional view of a captive fastener within a channel in accordance with an illustrative example;
**Figure 13** is an illustration of a view of a structure with a captive fastener within a channel in accordance with an illustrative example;
**Figure 14** is an illustration of a block diagram of a manufacturing environment in accordance with an illustrative example;
**Figure 15** is a flowchart of a method of managing fibers in accordance with an illustrative example;
**Figure 16** is a flowchart of a method of installing a captive fastener in accordance with an illustrative example;
**Figure 17** is an illustration of an aircraft manufacturing and service method in a form of a block diagram in accordance with an illustrative example; and
**Figure 18** is an illustration of an aircraft in a form of a block diagram in which an illustrative example may be implemented.

### DETAILED DESCRIPTION

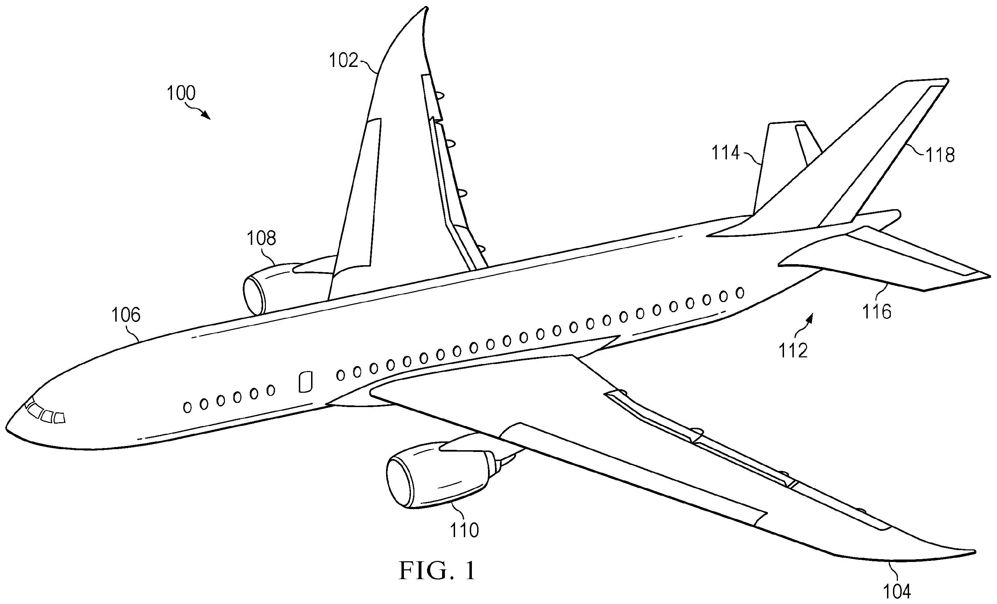

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have fibers to be managed. In some illustrative examples, systems of aircraft 100 can be tested using maintenance equipment with a fiber management system.

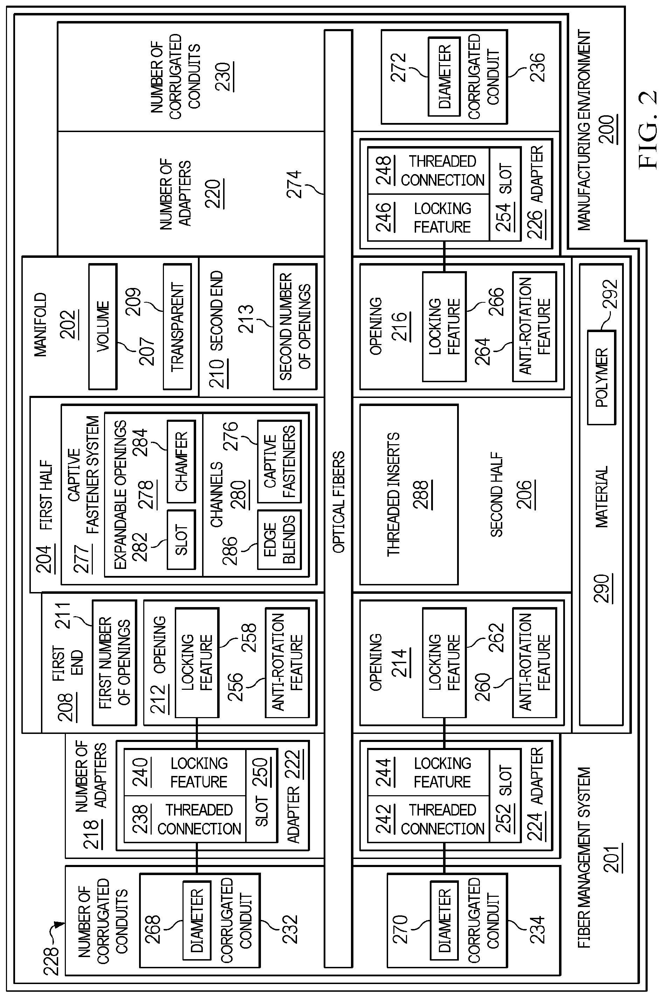

Turning now to **Figure 2****,** an illustration of a block diagram of a manufacturing environment is depicted in accordance with an illustrative example. Fiber management system **201** can be created in manufacturing environment **200.** Fiber management system **201** can be utilized in manufacturing environment **200.**

Manifold **202** is configured to connect corrugated conduits. In this illustrative example, manifold **202** connects number of corrugated conduits **228** and number of corrugated conduits **230.** Manifold **202** comprises first half **204,** second half **206** removably connected to first half **204** to form volume **207** within manifold **202,** first number of openings **211** on first end **208** to access volume **207,** and second number of openings **213** on second end **210** to access volume **207.** Removing first half **204** from second half **206** cleaves each of first number of openings **211** and each of second number of openings **213.**

There are technical effects associated with the cleaving of each of first number of openings **211** and each of second number of openings **213.** These include ease of installation due to the removing of individual tightening of tubing (grooves) into cleaves to secure tubes with the clamping of the cleaves. Improved security of clamping is provided. The feature also has the advantage of assisting with any potential clearance issues that would be involved with tightening. Further advantages of this feature include enabling a modular approach, and the ability to increase tubing splits and or increase diameter by interchanging manifold.

These advantageous effects contrast previous approaches that required the need to install tubing into a manifold. With the installation of individual tubing, previous approaches required the flexing of tubing through tightening. This would make installation difficult and potentially costly, as fiber could potentially be damaged through install - problems mitigated by the present approach.

In this illustrative example, first number of openings **211** comprises a different quantity of openings from second number of openings **213.** A quantity of openings on each end of first end **208** and second end **210** corresponds to a respective quantity of corrugated conduits to be connected to each of first end **208** and second end **210.** In this illustrative example, first number of openings **211** comprises two openings, opening **212** and opening **214.** In this illustrative example, second number of openings **213** comprises one opening, opening **216.** In this illustrative example, number of corrugated conduits **228** connected to first end **208** of manifold **202** comprises two corrugated conduits, corrugated conduit **232** and corrugated conduit **234.** In this illustrative example, number of corrugated conduits **230** connected to second end **210** of manifold **202** comprises one corrugated conduit, corrugated conduit **236.** In this illustrative example, manifold **202** can be described as a 2:1 manifold.

First number of openings **211** comprises locking features configured to retain an adapter. In this illustrative example, opening **212** comprises locking feature **258** and opening **214** comprises locking feature **262.** Locking feature **258** is configured to retain adapter **222.** Locking feature **258** interacts with locking feature **240** to retain adapter **222.** Locking feature **258** and locking feature **240** are non-threaded. Locking feature **262** is configured to retain adapter **224.** Locking feature **262** interacts with locking feature **244** to retain adapter **224.** Locking feature **262** and locking feature **244** are non-threaded.

Second number of openings **213** comprises locking features configured to retain an adapter. In this illustrative example, opening **216** comprises locking feature **266.** Locking feature **266** is configured to retain adapter **226.** Locking feature **266** interacts with locking feature **246** to retain adapter **226.** Locking feature **266** is non-threaded.

In this illustrative example, the locking features are present on both first half **204** and second half **206.** In some illustrative examples, the locking features are operational when first half **204** and second half **206** are removably connected. In some illustrative examples, the locking features comprise a series of grooves.

In some illustrative examples, first number of openings **211** comprises an anti-rotation feature. In this illustrative example, opening **212** comprises anti-rotation feature **256** and opening **214** comprises anti-rotation feature **260.** In this illustrative example, opening **216** comprises anti-rotation feature **264.** Anti-rotation features can comprise a protrusion configured to interaction with a respective adapter.

In some illustrative examples, number of adapters **218** comprise slots. As depicted, anti-rotation feature **256** interacts with slot **250** in adapter **222.** As depicted, anti-rotation feature **260** interacts with slot **252** in adapter **224.** As depicted, anti-rotation feature **264** interacts with slot **254** in adapter **226.** The anti-rotation features are configured to restrict movement of respective adapters.

Each of slot **250,** slot **252,** and slot **254** can allow for fibers to be inserted into fiber management system **201** without separating manifold 202. In some illustrative examples, slot **250,** slot **252,** and slot **254** act as keying features. In some illustrative examples, anti-rotation feature **256,** anti-rotation feature **260,** and anti-rotation feature **264** act as keying features.

In some illustrative examples, slot **250,** slot **252,** and slot **254** can reduce compression on each respective adapter. Slot **250,** slot **252,** and slot **254** can allow for manifold 202 to compress a respective adapter to hold the respective adapter within manifold **202** without undesirably damaging the respective adapter.

Material **290** of manifold **202** is selected to allow for desired operations of fiber management system **201.** In some illustrative examples, material **290** of manifold **202** is selected based on an operational environment for fiber management system **201.** In some illustrative examples, material **290** of manifold **202** is selected based on weight. In some illustrative examples, material **290** is selected to enable at least one of inspection, maintenance, or operation. In some illustrative examples, material **290** of manifold **202** is selected to allow stray beams of light from broken fiber to be visually detected. In some illustrative examples, material **290** is selected to allow for inspection of optical fibers **274** in manifold **202.** In some illustrative examples, manifold **202** comprises polymer **292.** In some illustrative examples, polymer **292** is at least one of transparent **209** or translucent.

In some illustrative examples, material **290** of manifold **202** is a non-frangible material. In some illustrative examples, material **290** of manifold **202** is a material selected to reduce or prevent shattering of manifold **202.** In some illustrative examples, material **290** of manifold **202** provides sufficient flexibility for fastening. In some illustrative examples, material **290** of manifold **202** is sufficiently compliant to allow for captive fasteners **276** to be sent through expandable openings **278.** In this illustrative example, manifold **202** comprises captive fastener system **277.** Captive fastener system **277** retains captive fasteners **276** to reduce foreign object debris. In some illustrative examples, captive fastener system **277** comprises an expandable opening with an initial diameter within one of the first half or the second half, wherein the expandable opening is connected to a channel, and wherein the channel within the first half or the second half has an internal diameter larger than the initial diameter and an exit diameter configured to retain a head of a fastener inside the channel.

In this illustrative example, expandable openings **278** are present in first half **204** of manifold **202.** To restrain captive fasteners **276,** captive fasteners **276** are sent through expandable openings **278.** In some illustrative examples, each of expandable openings **278** comprises slot **282** and chamfer **284.** A respective slot allows for captive fasteners **276** to enter through expandable openings **278.** Edge blends **286** within channels **280** can aid in retention of captive fasteners **276.** Edge blends **286** within channels **280** can allow for intentional removal of captive fasteners **276** from channels **280.**

To secure first half **204** to second half **206** of manifold **202,** captive fasteners **276** are fastened to second half **206.** In some illustrative examples, captive fasteners **276** are secured to threaded inserts **288** in second half **206.** In other illustrative examples, captive fasteners **276** are secured to threads in second half **206.**

Fiber management system **201** comprises manifold **202,** number of corrugated conduits **228,** number of corrugated conduits **230,** number of adapters **218** connecting number of corrugated conduits **228** to first end **208** of manifold **202,** and number of adapters **220** connecting number of corrugated conduits **230** to second end **210** of manifold **202.** Each of number of adapters **218** comprises a threaded connection and a non-threaded locking feature. Each of number of adapters **220** comprises a threaded connection and a non-threaded locking feature.

In some illustrative examples, at least one adapter of number of adapters **218** comprises a threaded connection with a diameter different than another adapter. In this illustrative example, adapter **222** has threaded connection **238** configured to connect to corrugated conduit **232** with diameter **268.** In this illustrative example, adapter **224** has threaded connection **242** configured to connect to corrugated conduit **234** with diameter **270.** In some illustrative examples, diameter **268** is different from diameter **270.** In some illustrative examples, although diameter **268** and diameter **270** are different, the locking features of adapter **222** and adapter **224** are the same.

In this illustrative example, threaded connection **248** is configured to connect to corrugated conduit **236.** In this illustrative example, corrugated conduit **236** has diameter **272.**

In some illustrative examples, all adapters of number of adapters **218** and number of adapters **220** have a same size locking feature configured to interface with manifold **202.** In some illustrative examples, manifold **202** comprises anti-rotation features configured to restrict movement of number of adapters **218.**

Manifold **202** is a two-piece body, variable size branch design that allows the ability to inspect, modify and, repair assembly without disassembly of other portions of the wire assembly. The illustrative examples allow for each branch to be standalone until reassembly with the manifold body. Non-threaded locking features allow for reduction or elimination of twisting for number of corrugated conduits **228** and number of corrugated conduits **230.**

In some illustrative examples, manifold 202 comprises a clear two-piece body split design that utilizes a common size locking feature for all adapters to allow the ability to easily change size while maintaining existing body design. In some illustrative examples, the locking features take the form of a number of collars.

In some illustrative examples, each threaded adapter, number of adapters **218** and number of adapters **220,** maintains a slot to allow fibers to be fed through without the need to disassemble fiber assembly. In some illustrative examples, the slot takes the form of a +/.1" split.

In this illustrative example, a captive hardware design is provided to maintain hardware within manifold **202** in the event of hardware loosening. Captive fastener system **277** maintains captive fasteners **276** within manifold **202.**

The illustrative examples can be used for any conductor and fiber cable running through a conduit that has a split or junction. The illustrative examples can be used for test equipment that verifies operation of conductors and fiber cable. The illustrative examples can be used on aircraft, ships, commercial buildings, or other platforms that utilize corrugated conduits.

The illustrative examples allow for at least one of modification, inspection, or repair without disassembling the cable assembly from the connector to the Y adapter. Visual inspection of fiber in old manifold adapter area is not possible as material was not transparent nor allowed the ability to inspect easily.

The illustration of manufacturing environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, in some illustrative examples, manifold **202** can have more than two openings on first end **208.** In other illustrative examples, manifold **202** can have more than one opening on second end **210.** In some illustrative examples, threaded inserts **288** are optional.

As another example, captive fasteners **276** can be optional. In some illustrative examples, manifold **202** can be fastened together without captive fastener system **277.** In some illustrative examples, when captive fasteners **276** are not utilized, expandable openings **278** are not present.

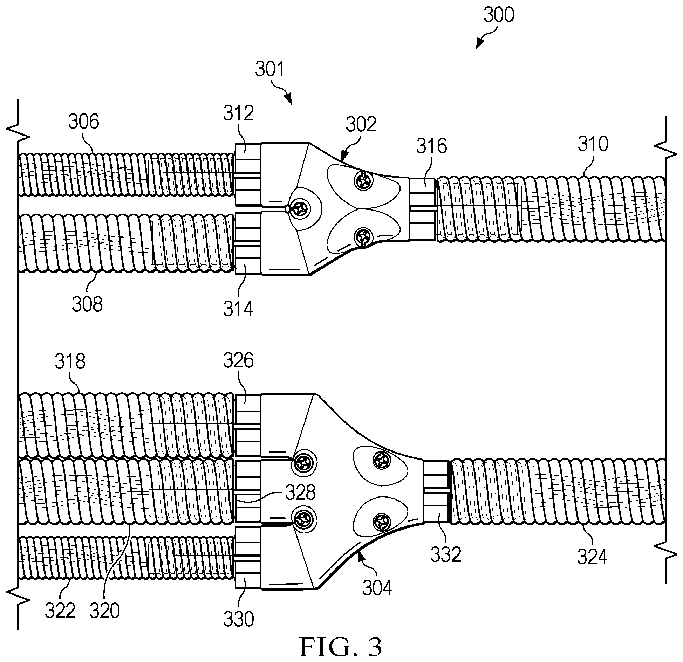

Turning now to **Figure 3****,** an illustration of fibers extending through corrugated conduits and manifolds is depicted in accordance with an illustrative example. In view **300,** manifold **302** and manifold **304** can be physical implementations of manifold **202** of **Figure 2****.** Manifold **302** connects two corrugated conduits on a first end of manifold **302** to a single corrugated conduit on a second end of manifold **302.** Corrugated conduit **306** and corrugated conduit **308** are connected to a first end of manifold **302.** Corrugated conduit **310** is connected to a second end of manifold **302.** Manifold **302** may be referred to as a 2/1 manifold.

Manifold **304** connects three corrugated conduits on a first end of manifold **304** to a single corrugated conduit on a second end of manifold **304.** Corrugated conduit **318,** corrugated conduit **320,** and corrugated conduit **322** are connected to a first end of manifold **304.** Corrugated conduit **324** is connected to a second end of manifold **304.** Manifold **304** can be referred to as a 3/1 manifold.

The manifolds are connected to the corrugated conduits by adapters. A number of adapters extend into the corrugated conduits and manifold **302.** Adapter **312** connects corrugated conduit **306** to manifold **302.** Adapter **314** connects corrugated conduit **308** to manifold **302.** Adapter **316** connects corrugated conduit **310** to manifold **302.** Adapter **312,** adapter **314,** and adapter **316** can be physical implementations of number of adapters **218** and number of adapters **220** of **Figure 2****.**

A number of adapters extend into the corrugated conduits and manifold **304.** Adapter **326** connects corrugated conduit **318** to manifold **304.** Adapter **328** connects corrugated conduit **320** to manifold **304.** Adapter **330** connects corrugated conduit **322** to manifold **304.** Adapter **332** connects corrugated conduit **324** to manifold **304.** Adapter **326,** adapter **328,** adapter **330,** and adapter **332** can be physical implementations of number of adapters **218** and number of adapters **220** of **Figure 2****.**

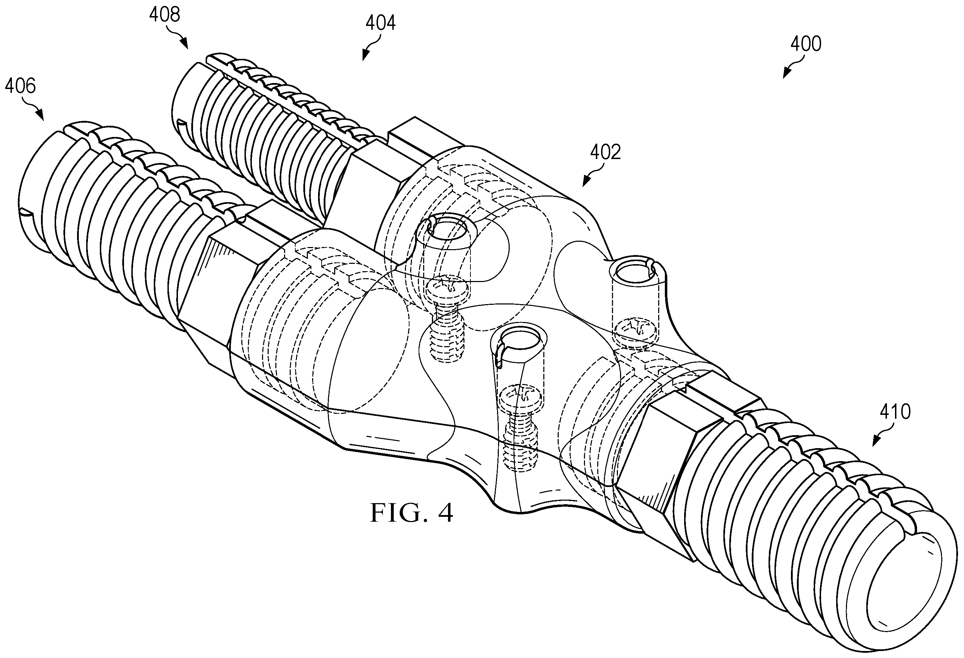

Turning now to **Figure 4****,** an illustration of an isometric view of a manifold and adapters is depicted in accordance with an illustrative example. Manifold **402** in view **400** is a physical implementation of manifold **202** of **Figure 2****.** In some illustrative examples, manifold **402** is the same as manifold **302** of **Figure 3****.** Manifold **402** can be used within aircraft **100** to run wires, such as electrical wires or fiber optics. In some illustrative examples, manifold **402** can be a portion of maintenance equipment used for testing of components of aircraft **100.**

Number of adapters **404** are connected to manifold **402.** Number of adapters **404** includes adapter **406** and adapter **408** connected to manifold **402.** Number of adapters **404** includes adapter **410** connected to manifold **402.**

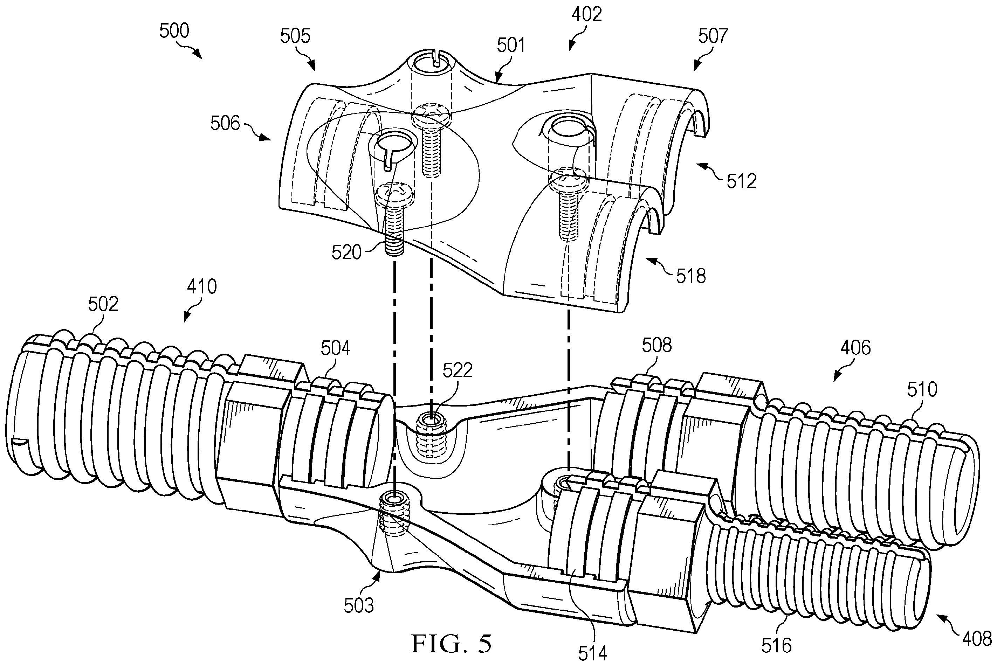

Turning now to **Figure 5****,** an illustration of a partially exploded side view of a manifold and adapters is depicted in accordance with an illustrative example. View **500** is a partially exploded view of manifold **402.** In view **500,** manifold **402** is depicted as transparent for ease of explanation. Manifold **402** can be manufactured from any desirable material having any desirable color or opacity. In this illustrative example, manifold **402** comprises first half **501** and second half **503.**

In view **500,** number of adapters **404** is more clearly depicted. In this illustrative example, number of adapters **404** comprise more than one diameter. Each of number of adapters **404** has a same size connection for engaging with manifold **402.** Each of number of adapters can be removed and replaced with a different adapter if a different diameter adapter is desired.

Adapter **410** comprises threaded connection **502** and locking feature **504.** Locking feature **504** is non-threaded. In some illustrative examples, locking feature **504** can take another desired shape to retain adapter **410** within manifold **402** without threads. Locking feature **504** is the same as locking feature **508** and locking feature **514.** When a different type of locking feature is used for adapter **410,** all adapters for manifold **402** will have the same type of locking feature so that adapters are universal.

In this illustrative example, locking feature **504** takes the form of cylindrical protrusions. The cylindrical protrusions of locking feature **504** retain adapter **410** within opening **506** of manifold **402.** In this illustrative example, opening **506** is on first end **505** of manifold **402.** When manifold **402** is connected, adapter **406** and adapter **408** are connected to first end **505** of manifold **402.** In this illustrative example, the locking features comprise a series of grooves. In these illustrative examples, each of the adapters have a same size locking feature configured to interface with manifold **402.**

In this illustrative example, locking feature **508** takes the form of cylindrical protrusions. The cylindrical protrusions of locking feature **508** retain adapter **406** within opening **512** of manifold **402.** In this illustrative example, opening **512** is on second end **507** of manifold **402.** When manifold **402** is connected, adapter **410** is connected to second end **507** of manifold **402.**

In this illustrative example, locking feature **514** takes the form of cylindrical protrusions. The cylindrical protrusions of locking feature **514** retain adapter **408** within opening **518** of manifold **402.** In this illustrative example, the protrusions are not continuous. In this illustrative example, opening **518** is on second end **507** of manifold **402.**

Adapter **406** comprises locking feature **508** and threaded connection **510.** Threaded connection **502** and threaded connection **510** do not have the same diameter, but they could as the application demands. Adapter **408** comprises locking feature **514** and threaded connection **516.** Threaded connection **516** has a smaller diameter than threaded connection **510** and threaded connection **502.**

In this illustrative example, each of opening **506,** opening **512,** and opening **518** have locking features to interface with locking features of the adapters. The locking features of manifold **402** are operational when first half **501** and second half **503** are removably connected.

In this illustrative example, captive fasteners **520** are used to connect first half **501** to second half **503** of manifold **402.** Captive fasteners **520** are restrained within channels of first half **501** of manifold **402.** Captive fasteners **520** connect to threaded inserts **522** in second half **503.** Although threaded inserts **522** are used in this illustrative example, in other structures, captive fasteners **520** can be connected into threads of second half **503.**

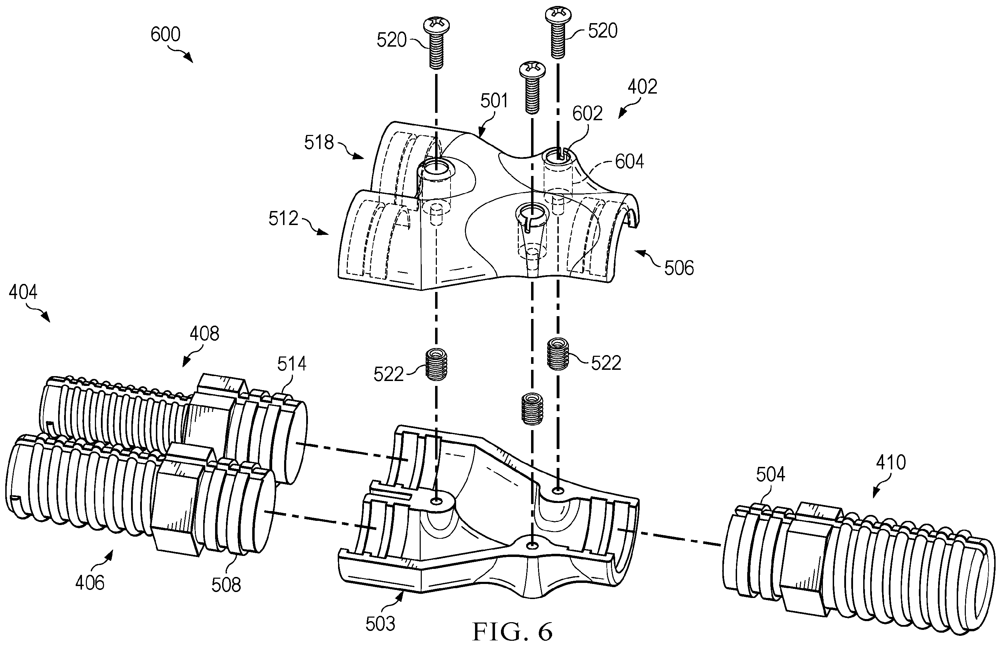

Turning now to **Figure 6****,** an illustration of an exploded isometric view of a manifold and adapters is depicted in accordance with an illustrative example. In view **600,** captive fasteners **520** are shown exploded out of expandable openings **602** in first half **501.** To install captive fasteners **520,** captive fasteners **520** are pressed into expandable openings **602.** The shafts of captive fasteners **520** are sent through expandable openings **602** and into channels **604.** The heads of captive fasteners **520** are sent through expandable openings **602** and then retained within channels **604.**

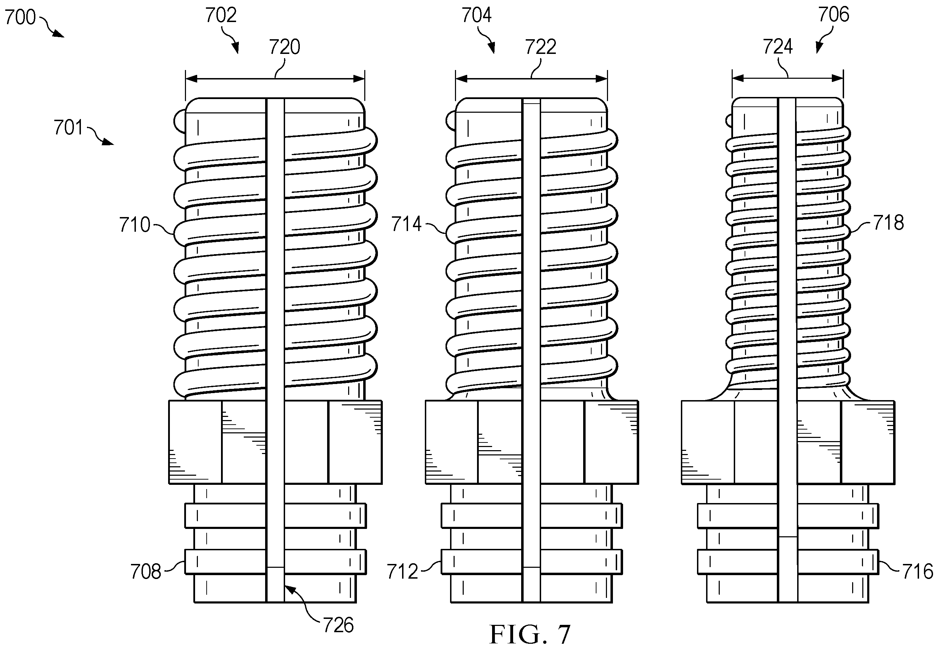

Turning now to **Figure 7****,** an illustration of a side view of multiple adapters is depicted in accordance with an illustrative example. Adapters **701** of **Figure 7** can be a physical implementation of adapters for number of adapters **218** or number of adapters **220.** In some illustrative examples, at least one adapter of adapters **701** can be used in fiber management system **301** in **Figure 3****.** In some illustrative examples, adapters **701** can be used in conjunction with manifold **402** of **Figures 4-6****.**

In view **700,** adapters **701** are aligned to more easily compare the components. Each of adapters **701** has a different design than each other of adapters **701.** Adapters **701** include adapter **702,** adapter **704,** and adapter **706.** Adapter **702** has locking feature **708** and threaded connection **710.** Adapter **704** has locking feature **712** and threaded connection **714.** Adapter **706** has locking feature **716** and threaded connection **718.** Locking feature **708,** locking feature **712,** and locking feature **716** are each the same. Locking feature **708,** locking feature **712,** and locking feature **716** allow for adapters **701** to be interchangeable in a manifold. In some illustrative examples, locking feature **708,** locking feature **712,** and locking feature **716** are referred to as universal locking features.

Threaded connection **710,** threaded connection **714,** and threaded connection **718** are configured to connect to different diameters of corrugated conduits. As depicted, threaded connection **710** has a larger diameter and a thicker thread than threaded connection **714** and threaded connection **718.** Threaded connection **710** has diameter **720.** Diameter **720** is larger than diameter **722** and diameter **724.** Adapter **702** is configured to connect to a corrugated conduit with a largest diameter. As depicted, threaded connection **714** has diameter **722** smaller than diameter **720.** Threaded connection **718** has a smallest diameter and narrowest threads of adapters **701.** Threaded connection **718** has diameter **724.**

In this illustrative example, each of plurality of adapters **701** comprises a slot. In this illustrative example, adapter **702** comprises slot **726.** Slot **726** can stop adapter **702** from rotating in a manifold. In some illustrative examples, slot **726** can act as a keying feature. Fibers extending through adapter **702** may twist if adapter **702** spins. Preventing spinning can maintain quality of the fibers. In some illustrative examples, slot **726** allows fibers to be inserted into the fiber management system.

Slot **726** can reduce compression on the adapter. Slot **726** can allow for a manifold to compress adapter **702** to hold adapter **702** within the manifold without undesirably damaging adapter **702.**

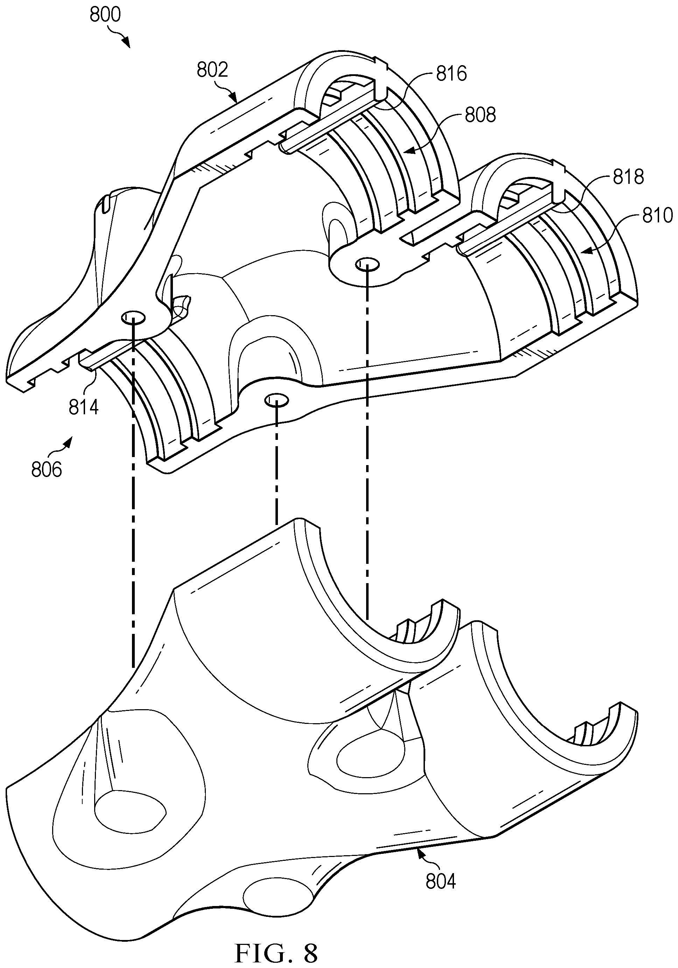

Turning now to **Figure 8****,** an illustration of a bottom view of a manifold with anti-rotation features is depicted in accordance with an illustrative example. Manifold **800** is a physical implementation of manifold **202 of** **Figure 2****.** In some illustrative examples, manifold **800** can be the same as manifold **302** of **Figure 3****.** Manifold **800** can be the same as manifold **402** of **Figures 4-6****.** In some illustrative examples, manifold **800** can be used with adapters **701** of **Figure 7****.**

Manifold **800** comprises first half **802** and second half **804** removably connected to first half **802** to form a volume within manifold **800.** Manifold **800** comprises a first number of openings on a first end to access the volume. In this illustrative example, the first number of openings comprises opening **806.** Manifold **800** comprises a second number of openings on a second end to access the volume. In this illustrative example, the second number of openings comprises opening **808** and opening **810.** Each of the openings has an anti-rotation feature. Opening **806** has anti-rotation feature **814.** Opening **808** has anti-rotation feature **816.** Opening **810** has anti-rotation feature **818.**

Each anti-rotation feature can prevent rotation of a respective adapter and corrugated conduit. In some illustrative examples, each anti-rotation feature can act as a keying feature.

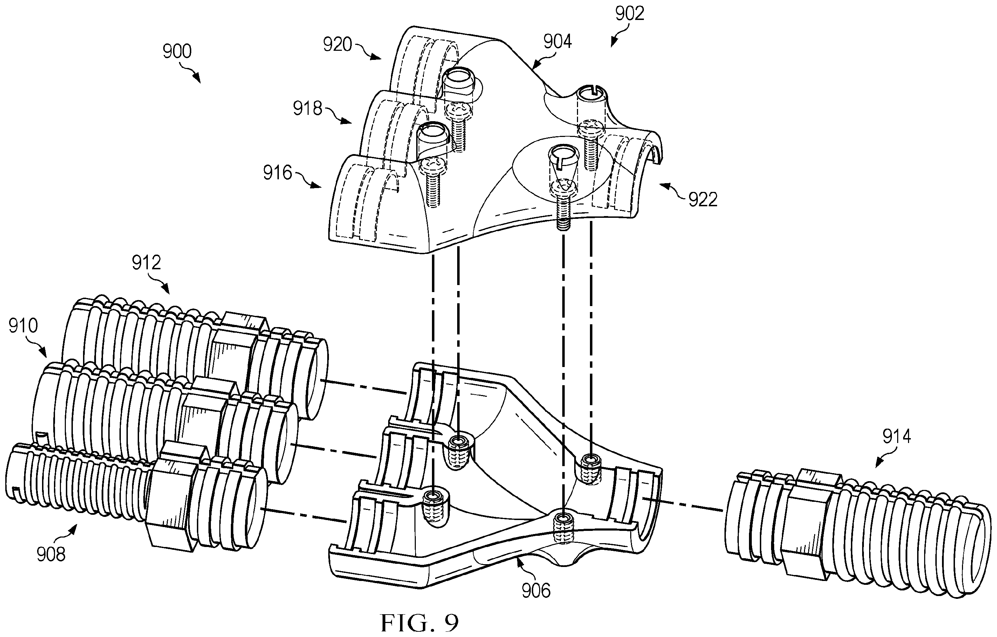

Turning now to **Figure 9****,** an illustration of an exploded isometric view of a manifold and adapters is depicted in accordance with an illustrative example. Manifold **902** in view **900** is a physical implementation of manifold **202** of **Figure 2****.** In some illustrative examples, manifold **902** is the same as manifold **304** of **Figure 3****.** Manifold **902** can be used within aircraft **100** to run wires, such as electrical wires or fiber optics. In some illustrative examples, manifold **902** can be a portion of maintenance equipment used for testing of components of aircraft **100.** Manifold **902** can be referred to as a 3/1 manifold.

Manifold **902** comprises first half **904** and second half **906.** Separating first half **904** and second half **906** cleaves each of opening **916,** opening **918,** opening **920,** and opening **922.** A plurality of adapters can be used to connect a plurality of corrugated conduits to manifold **902.** In this illustrative example, the plurality of adapters comprises adapter **908,** adapter **910,** adapter **912,** and adapter **914.** Each of the plurality of adapters is interchangeable due to the same locking features. Each adapter can be selected based on a size of a corrugated conduit.

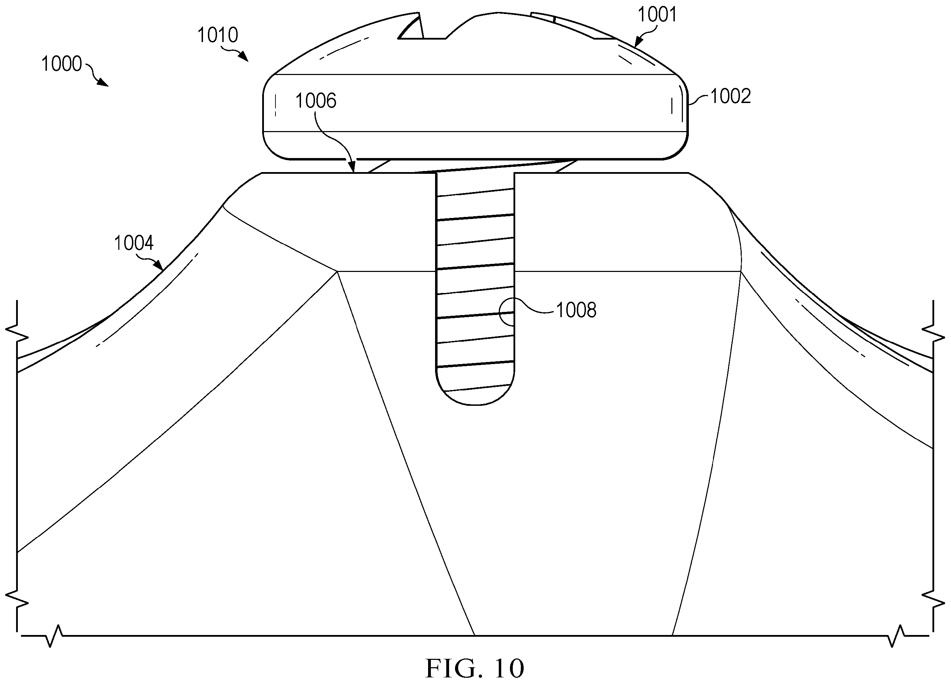

Turning now to **Figure 10****,** an illustration of a side view of a fastener prior to installation as a captive fastener is depicted in accordance with an illustrative example. In some illustrative examples, fastener **1001** and structure **1004** can be components of aircraft **100** of **Figure 1****.** In some illustrative examples, structure **1004** can be a physical implementation of manifold **202** of **Figure 2****.** In some illustrative examples, structure **1004** can be a portion of manifold **402** of **Figures 4-6****.** In some illustrative examples, structure **1004** can be a portion of manifold **800** of **Figure 8****.** In some illustrative examples, structure **1004** can be a portion of manifold **902** of **Figure 9****.**

View **1000** is a view of fastener **1001** prior to being installed in structure **1004** as a captive fastener. In view **1000,** a shank portion of fastener **1001** extends into structure **1004.** Head **1002** of fastener **1001** is outside of structure **1004.**

The shank portion of fastener **1001** is extending through expandable opening **1006.** Expandable opening **1006** is configured to expand to allow head **1002** of fastener **1001** through expandable opening **1006.** Slot **1008** in structure **1004** allows for expansion of expandable opening **1006** to allow entry of head **1002** of fastener **1001.**

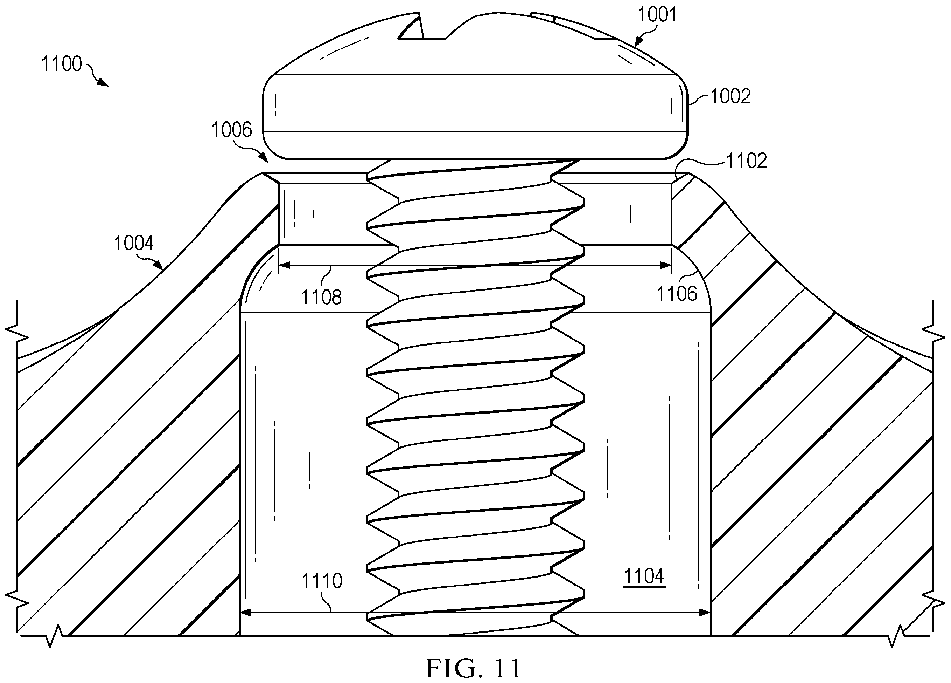

Turning now to **Figure 11****,** an illustration of a cross-sectional view of a fastener prior to installation as a captive fastener in a channel is depicted in accordance with an illustrative example. View **1100** is a cross-sectional view of structure **1004.** In view **1100,** chamfer **1102** of expandable opening **1006** is visible. Chamfer **1102** allows for easier entry of head **1002** of fastener **1001.**

Channel **1104** in structure **1004** is visible in view **1100.** Channel **1104** comprises edge blend **1106** configured to retain head **1002** of fastener **1001.** Edge blend **1106** can be referred to as an upper inner edge blend. Edge blend **1106** improves captive function while allowing for intentional removal of fasteners for replacement. Edge blend **1106** within channel **1104** leads towards expandable opening **1006.**

Expandable opening **1006** has initial diameter **1108** and is connected to channel **1104.** Channel **1104** has internal diameter **1110** larger than initial diameter **1108.** Channel also has an exit diameter (not depicted) configured to retain head **1002** of fastener **1001** inside channel **1104.** Internal diameter **1110** of channel **1104** is configured to allow movement of head **1002** within channel **1104.**

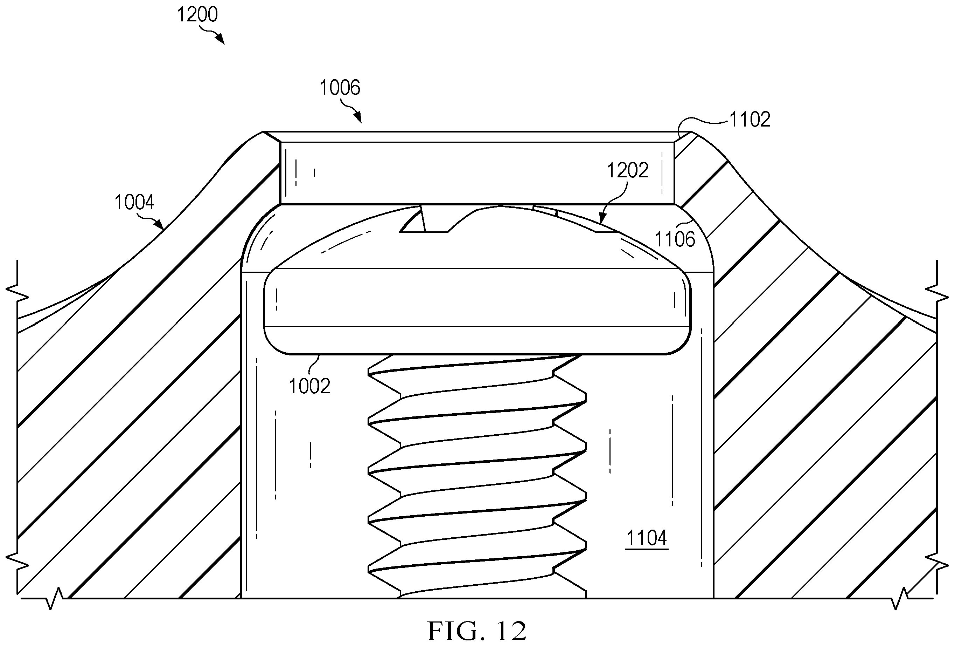

Turning now to **Figure 12****,** an illustration of a cross-sectional view of a captive fastener within a channel is depicted in accordance with an illustrative example. In view **1200,** fastener **1001** has been sent through expandable opening **1006** and into channel **1104.** In view **1200,** fastener **1001** is referred to as captive fastener **1202.** Head **1002** of fastener **1001** is restrained within channel **1104.**

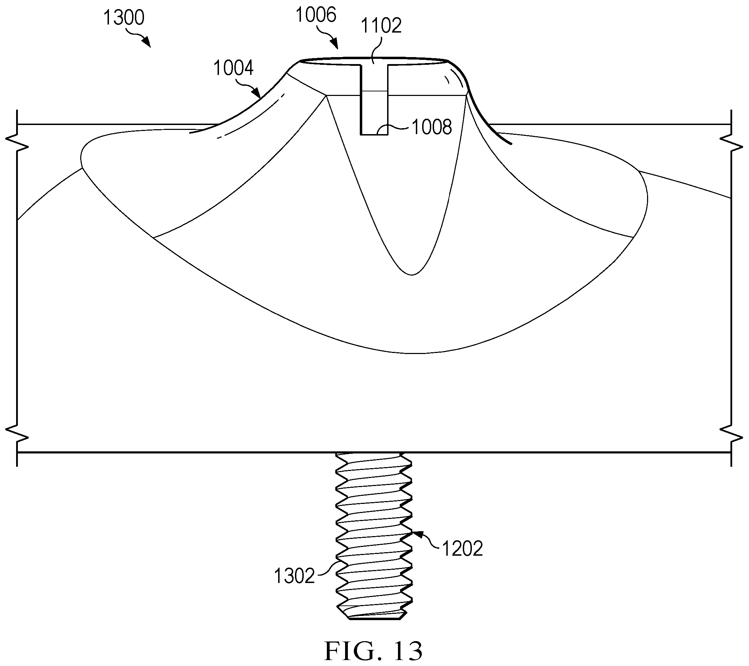

Turning now to **Figure 13****,** an illustration of a view of a structure with a captive fastener within a channel is depicted in accordance with an illustrative example. In view **1300,** shaft **1302** of captive fastener **1202** extends outside of structure **1004.** Head **1002** of captive fastener **1202** is not visible in view **1300.** In view **1300,** head **1002** of captive fastener **1202** is retained within channel **1104.** Captive fastener **1202** can be used to join structure **1004** to another structure.

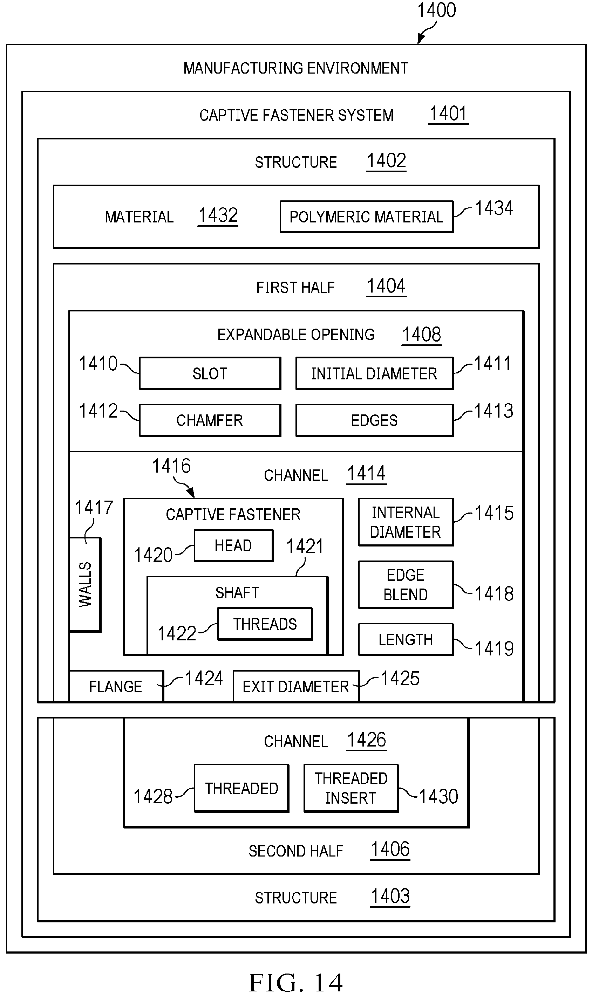

Turning now to **Figure 14****,** an illustration of a block diagram of a manufacturing environment is depicted in accordance with an illustrative example. Captive fastener system **1401** can be used in aircraft **100** of **Figure 1****.** Captive fastener system **1401** can be used in fiber management system **201** of **Figure 2****.** Captive fastener system **1401** can include captive fasteners **276** of **Figure 2****.** Captive fastener system **1401** can be used in manifold 302 or manifold **304** of **Figure 3****.** Captive fastener system **1401** can be used in manifold **402** of **Figures 4-6****.** Captive fastener system **1401** can be used in manifold **800** of **Figure 8****.** Captive fastener system **1401** can be used in manifold **902** of **Figure 9****.** Captive fastener system **1401** can comprise fastener **1001** and channel **1104** of structure **1004** in **Figures 10-13****.**

Captive fastener system **1401** can be assembled in manufacturing environment **1400.** Captive fastener system **1401** comprises channel **1414** and expandable opening **1408** with initial diameter **1411** connected to channel **1414.** Channel **1414** has internal diameter **1415** larger than initial diameter **1411** and exit diameter **1425** configured to retain head **1420** of captive fastener **1416** inside the channel **1414.**

Features of channel **1414** and expandable opening **1408** are configured to allow controlled insertion of captive fastener **1416** and intentional removal of captive fastener **1416.** Features of channel **1414** and expandable opening **1408** are configured to retain captive fastener **1416** within channel **1414.** Retaining captive fastener **1416** within channel **1414** reduces or eliminates foreign object debris (FOD).

In some illustrative examples, the features of channel **1414** comprise edge blend **1418.** In some illustrative examples, edge blend **1418** is present within channel **1414** leading towards expandable opening **1408.** In some illustrative examples, captive fastener system **1401** comprises edge blend **1418** within channel **1414** on an opposite end from exit diameter **1425.** In some illustrative examples, edge blend **1418** retains head **1420** within channel **1414.** In some illustrative examples, edge blend **1418** is configured to aid in controlled removal of captive fastener **1416** from channel **1414.** In some illustrative examples, edge blend **1418** is configured based on a size and shape of head **1420.**

In some illustrative examples, the features of expandable opening **1408** comprise chamfer **1412.** In some illustrative examples, chamfer **1412** on expandable opening **1408** is configured to allow for insertion of head **1420** into channel **1414.**

In some illustrative examples, the features of expandable opening **1408** comprise slot **1410.** In some illustrative examples, slot **1410** is in structure **1402** extending from expandable opening **1408** towards channel **1414.** In some illustrative examples, slot **1410** allows for expandable opening **1408** to increase from initial diameter **1411** to a size large enough to allow head **1420** to enter channel **1414.**

Channel **1414** has length **1419.** In some illustrative examples, length **1419** of channel **1414** is sufficient to fully house captive fastener **1416** including shaft **1421** and head **1420.** In some illustrative examples, length **1419** of channel **1414** is sufficiently long so that threads **1422** are not protruding from structure **1402.** In some illustrative examples, structure **1402** can be described as first half **1404** of an assembly such as a manifold. Length **1419** of channel **1414** can enable mating of structure **1402** and structure **1403** without potential foreign object debris. Length **1419** of channel **1414** can enable mating of structure **1402** and structure **1403** without captive fastener **1416** inadvertently damaging structure **1403.**

Structure **1402** is formed of material **1432** configured to allow for insertion and removal of captive fastener **1416** without damage to structure **1402.** In some illustrative examples, material **1432** is configured to provide sufficient flexibility to allow for insertion and removal of captive fastener **1416** without damage to structure **1402.** In some illustrative examples, material **1432** comprises polymeric material **1434.** In some illustrative examples, edges **1413** of expandable opening **1408** and walls **1417** of the channel **1414** are formed by polymeric material **1434.**

Internal diameter **1415** of the channel is configured to allow movement of the head **1420** within channel **1414.** Exit diameter **1425** is smaller than internal diameter **1415.** Exit diameter **1425** is formed by any desirable feature of channel **1414.** In some illustrative examples, exit diameter **1425** is defined by flange **1424** extending inwardly in channel **1414.**

In some illustrative examples, captive fastener system **1401** comprises channel **1414** and captive fastener **1416** with head **1420** positioned within channel **1414.** Channel **1414** has expandable opening **1408** configured to allow entry of head **1420** of captive fastener **1416** and limit exit of head **1420** of captive fastener **1416** and exit diameter **1425** configured to allow shaft **1421** of captive fastener **1416** to extend through exit diameter **1425** and prevent exit of head **1420** of captive fastener **1416.**

Structure **1402** can be joined to structure **1403** by captive fastener **1416.** Structure **1403** comprises channel **1426** that receives captive fastener **1416.** In some illustrative examples channel **1426** is threaded to engage with threads **1422** of captive fastener **1416.** In other illustrative examples, threaded insert **1430** is present in channel **1426.** When threaded insert **1430** is present in channel **1426,** threaded insert **1430** is configured to engage with threads **1422** of captive fastener **1416.** In some illustrative examples, structure **1403** can be described as second half **1406** of an assembly.

The illustration of manufacturing environment **1400 in** **Figure 14** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, structure **1403** can be formed of the same material as material **1432** of structure **1402.** In other illustrative examples, structure **1403** can be formed of a different material as material **1432** of structure **1402.**

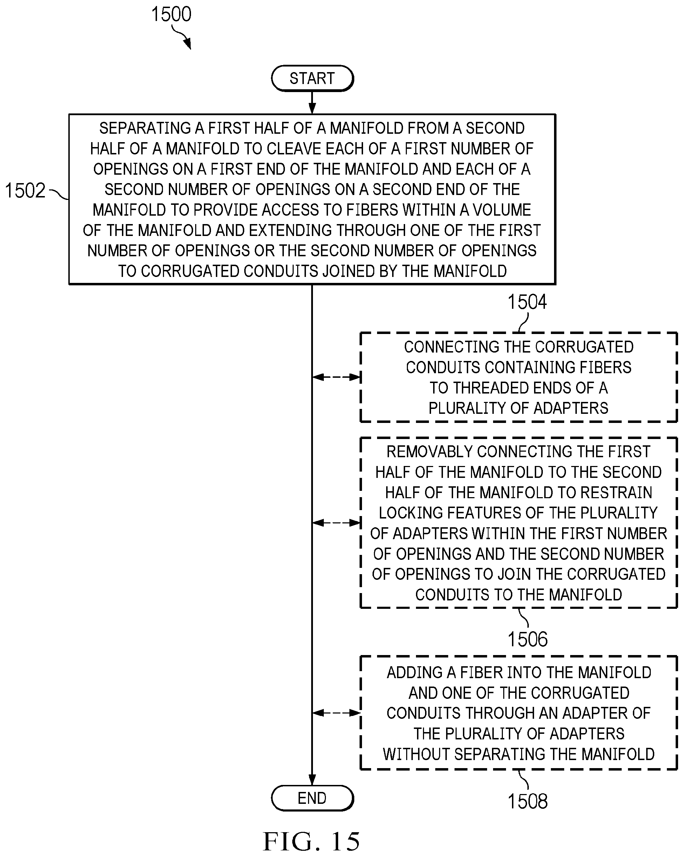

Turning now to **Figure 15****,** a flowchart of a method of managing fibers is depicted in accordance with an illustrative example. Method **1500** can be performed to manage fibers of aircraft **100** of **Figure 1****.** Method **1500** can be performed to manage optical fibers **274** of **Figure 2****.** Method **1500** can be performed using fiber management system **201** of **Figure 2****.** Method **1500** can be performed using fiber management system **301** of **Figure 3****.** Method **1500** can be performed using manifold **402** of **Figures 4-6****.** Method **1500** can be performed using adapters **701** of **Figure 7****.** Method **1500** can be performed using manifold **800** of **Figure 8****.** Method **1500** can be performed using manifold **902** of **Figure 9****.** Captive fastener system **1010** of **Figures 10-13** can be used in method **1500** to connect or disconnect the manifold. Captive fastener system **1401** of **Figure 14** can be used in method **1500** to connect or disconnect the manifold.

Method **1500** separates a first half of a manifold from a second half of a manifold to cleave each of a first number of openings on a first end of the manifold and each of a second number of openings on a second end of the manifold to provide access to fibers within a volume of the manifold and extending through one of the first number of openings or the second number of openings to corrugated conduits joined by the manifold (operation **1502).** Afterwards, method **1500** terminates.

In some illustrative examples, method **1500** connects the corrugated conduits containing fibers to threaded ends of a plurality of adapters (operation **1504).** In some illustrative examples, method **1500** removably connects the first half of the manifold to the second half of the manifold to restrain locking features of the plurality of adapters within the first number of openings and the second number of openings to join the corrugated conduits to the manifold (operation **1506).** By the locking features being non-threaded, the corrugated conduits are not twisted connecting the plurality of adapters to the manifold.

In some illustrative examples, method **1500** adds a fiber into the manifold and one of the corrugated conduits through an adapter of the plurality of adapters without separating the manifold (operation **1508).** In some illustrative examples, a slot within the adapter allows for insertion of a fiber through the adapter without separating the manifold. In some illustrative examples, insertion of the fiber can be viewed through a transparent or translucent material of the manifold.

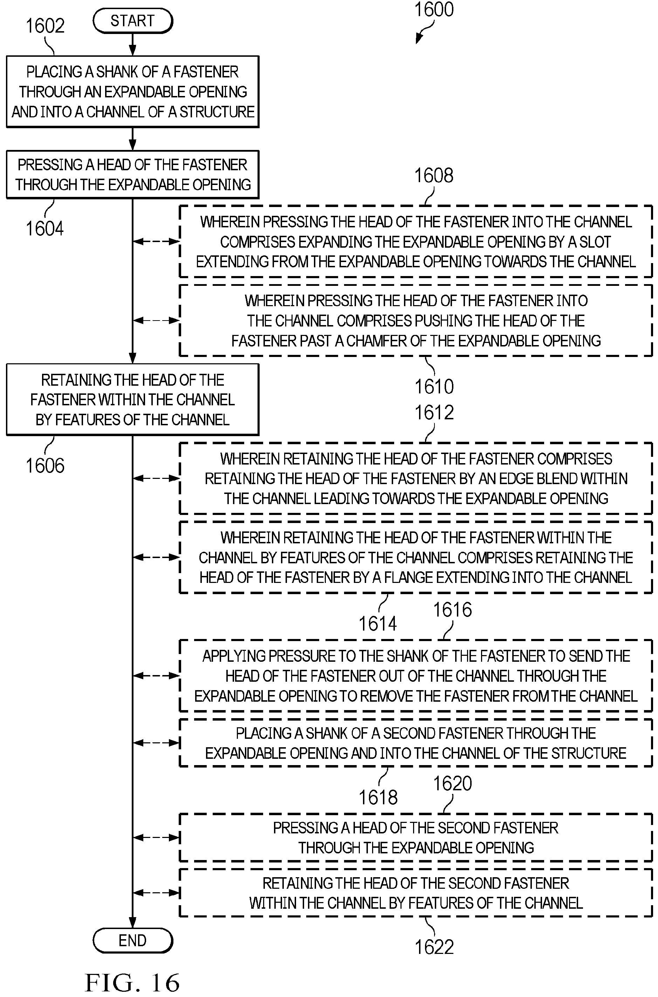

Turning now to **Figure 16****,** a flowchart of a method of installing a captive fastener is depicted in accordance with an illustrative example. Method **1600** can be performed to install a captive fastener in aircraft **100** of **Figure 1****.** Method **1600** can be performed to install captive fasteners **276** of **Figure 2****.** Method **1600** can be performed to install captive fasteners in fiber management system **301** of **Figure 3****.** Method **1600** can be performed to install captive fasteners in manifold **402** of **Figures 4-6****.** Method **1600** can be performed to install captive fasteners in manifold **800** of **Figure 8****.** Method **1600** can be performed using manifold **902** of **Figure 9****.** Captive fastener system **1010** of **Figures 10-13** can be used in method **1600** to connect or disconnect the manifold. Captive fastener system **1401** of **Figure 14** can be used in method **1600** to connect or disconnect the manifold.

Method **1600** places a shank of a fastener through an expandable opening and into a channel of a structure (operation **1602).** Method **1600** presses a head of the fastener through the expandable opening (operation **1604).** Method **1600** retains the head of the fastener within the channel by features of the channel (operation **1606).** Afterwards, method **1600** terminates.

In some illustrative examples, pressing the head of the fastener into the channel comprises expanding the expandable opening by a slot extending from the expandable opening towards the channel (operation **1608).** In some illustrative examples, pressing the head of the fastener into the channel comprises pushing the head of the fastener past a chamfer of the expandable opening (operation **1610).** In some illustrative examples, the chamfer aids in inserting the head through the expandable opening.

In some illustrative examples, retaining the head of the fastener comprises retaining the head of the fastener by an edge blend within the channel leading towards the expandable opening (operation **1612).** In some illustrative examples, retaining the head of the fastener within the channel by features of the channel comprises retaining the head of the fastener by a flange extending into the channel (operation **1614).**

In some illustrative examples, method **1600** applies pressure to the shank of the fastener to send the head of the fastener out of the channel through the expandable opening to remove the fastener from the channel (operation **1616).** In some illustrative examples, method **1600** places a shank of a second fastener through the expandable opening and into the channel of the structure (operation **1618).** In some illustrative examples, method **1600** presses a head of the second fastener through the expandable opening (operation **1620).**

In some illustrative examples, method **1600** retains the head of the second fastener within the channel by features of the channel (operation **1622).** In some illustrative examples, the features of the channels can include at least one of a flange forming an exit diameter. In some illustrative examples, the features of the channels can include an edge blend.

As used herein, the phrase "at least one of," when used with a list of items, means different combinations of one or more of the listed items may be used and only one of each item in the list may be needed. For example, "at least one of item A, item B, or item C," may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **1504** through operation **1508** may be optional. As another example, operation **1608** through operation **1622** may be optional.

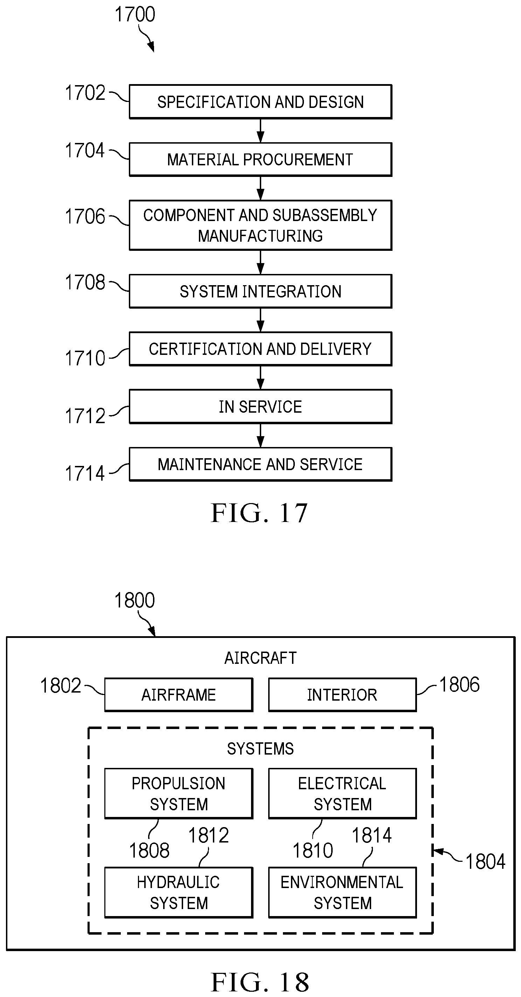

Illustrative examples of the present disclosure may be described in the context of aircraft manufacturing and service method **1700** as shown in **Figure 17** and aircraft **1800** as shown in **Figure 18****.** Turning first to **Figure 17****,** an illustration of an aircraft manufacturing and service method in a form of a block diagram is depicted in accordance with an illustrative example. During pre-production, aircraft manufacturing and service method **1700** may include specification and design **1702** of aircraft **1800** in **Figure 18** and material procurement **1704.**

During production, component and subassembly manufacturing **1706** and system integration **1708** of aircraft **1800** takes place. Thereafter, aircraft **1800** may go through certification and delivery **1710** in order to be placed in service **1712.** While in service **1712** by a customer, aircraft **1800** is scheduled for routine maintenance and service **1714,** which may include modification, reconfiguration, refurbishment, or other maintenance and service.

Each of the processes of aircraft manufacturing and service method **1700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 18****,** an illustration of an aircraft in a form of a block diagram is depicted in which an illustrative example may be implemented. In this example, aircraft **1800** is produced by aircraft manufacturing and service method **1700** of **Figure 17** and may include airframe **1802** with plurality of systems **1804** and interior **1806.** Examples of systems **1804** include one or more of propulsion system **1808,** electrical system **1810,** hydraulic system **1812,** and environmental system **1814.** Any number of other systems may be included.

Apparatuses and methods embodied herein may be employed during at least one of the stages of aircraft manufacturing and service method **1700.** One or more illustrative examples may be manufactured or used during at least one of component and subassembly manufacturing **1706,** system integration **1708,** in service **1712,** or maintenance and service **1714** of **Figure 17****.**

The illustrative examples present a manifold for connecting corrugated conduits. The illustrative examples present fiber management systems and methods of managing fibers. A fiber tubing manifold adapter is a multipiece variable input/output component that allows the fabrication and repair of fiber cables to be built up pre and post termination of the connectors. The illustrative examples can be utilized with a plurality of sizes of tubing. The illustrative examples allow for installation of fibers/wires after pin & socket termination of connector.

The illustrative examples also present a captive fastener system. The captive fastener system design features a tapered variable size opening that accepts mounting hardware during installation while keeping hardware captive upon rework. The captive fastener hardware designs eliminate potential FOD due to loose fasteners.

The illustrative examples allow for inspection, modification, and repair of fiber assemblies without completely disassembling the cable assembly from connector to the Y adapter. In some illustrative examples, the manifold enables visual inspection without disassembly of the manifold. In some illustrative examples, visual inspection can be performed when the manifold is at least one of transparent, nearly transparent, or translucent.

In some illustrative examples, the manifold provides the ability to add additional fiber and branches while keeping the remaining assembly intact. For example, when going from 2 branches to 3 branches, to add or modify tubing count or size the modular multi size and variable input/output design that maintains the existing parts allowing for the most adaptable solution.

The illustrative examples save the labor time for fabrication, modification and repair. The illustrative examples also increase quality by reducing the chance of damaged product. The illustrative examples reduce or eliminate the twisting of outer conduit tubing.

The illustrative examples are directed to a fiber tubing manifold having a multipiece variable input/output component which allows the fabrication and repair of fiber cables to be built up pre and post termination of the connectors. The current design is not constrained by size of tubing and installation of product is not limited to before pin & socket termination of connector. The illustrative examples include a modular manifold having a two-piece body and variable size branches that allow the ability to inspect, modify and, repair assembly without disassembly anywhere else in the system. The illustrative examples eliminate the twisting of tubing to allow each branch to be standalone until reassembly with the manifold body.

The captive fastener design maintains the fastener within the manifold in the event that the fastener becomes loose during installation or rework. Captive fastener design can be used on a multitude of pieces to be connected together.

Further examples are set out in the clauses below:
1. A manifold to connect corrugated conduits comprising:
   a first half;
   a second half removably connected to the first half to form a volume within the manifold;
   a first number of openings on a first end to access the volume; and
   a second number of openings on a second end to access the volume, wherein removing the first half from the second half cleaves each of the first number of openings and
   each of the second number of openings.
2. The manifold of clause 1, wherein the first number of openings comprises locking features configured to retain an adapter.
3. The manifold of clause 2, wherein the locking features are non-threaded.
4. The manifold of clause 1 or 2, wherein the locking features are present on both the first half and the second half, and wherein the locking features are operational when the first half and the second half are removably connected.
5. The manifold of any one of clauses 2-4, wherein the locking features comprise a series of grooves.
6. The manifold of any one of the preceding clauses, wherein the first number of openings comprises an anti-rotation feature.
7. The manifold of any one of the preceding clauses, wherein the manifold comprises a polymer.
8. The manifold of clause 7, wherein the polymer is at least one of transparent or translucent.
9. The manifold of any one of the preceding clauses, wherein the manifold comprises a captive fastener system.
10. The manifold of clause 9, wherein the captive fastener system comprises an expandable opening with an initial diameter within one of the first half or the second half, wherein the expandable opening is connected to a channel, and wherein the channel within the first half or the second half has an internal diameter larger than the initial diameter and an exit diameter configured to retain a head of a fastener inside the channel.
11. A fiber management system comprising:
   a manifold;
   a first number of corrugated conduits;
   a second number of corrugated conduits;
   a first number of adapters connecting the first number of corrugated conduits to a first end of the manifold; and
   a second number of adapters connecting the second number of corrugated conduits to a second end of the manifold.
12. The fiber management system of clause 11, wherein each of the first number of adapters comprises a threaded connection and a non-threaded locking feature.
13. The fiber management system of clause 12, wherein at least one adapter of the first number of adapters comprises a threaded connection with a diameter different than another adapter.
14. The fiber management system of clause 11, wherein all adapters of the first number of adapters and the second number of adapters have a same size locking feature configured to interface with the manifold.
15. The fiber management system of clause 12, wherein each non-threaded locking feature comprises a series of grooves.
16. The fiber management system of any one of clauses 11-15, wherein the manifold comprises a first half; a second half removably connected to the first half to form a volume within the manifold; a first number of openings on the first end to access the volume; and a second number of openings on a second end to access the volume, wherein removing the first half from the second half cleaves each of the first number of openings and each of the second number of openings.
17. The fiber management system of clause 16, wherein the manifold comprises anti-rotation features configured to restrict movement of the first number of adapters.
18. The fiber management system of any one of clauses 11-17, wherein the first number of adapters comprise slots.
19. The fiber management system of any one of clauses 11-18, further comprising a captive fastener system within the manifold.
20. A method of managing fibers comprising:
   separating a first half of a manifold from a second half of a manifold to cleave each of a first number of openings on a first end of the manifold and each of a second number of openings on a second end of the manifold to provide access to fibers within a volume of the manifold and extending through one of the first number of openings or the second number of openings to corrugated conduits joined by the manifold.
21. The method of clause 20, further comprising:
   connecting the corrugated conduits containing fibers to threaded ends of a plurality of adapters; and
   removably connecting the first half of the manifold to the second half of the manifold to restrain locking features of the plurality of adapters within the first number of openings and the second number of openings to join the corrugated conduits to the manifold.
22. The method of clause 21, further comprising adding a fiber into the manifold and one of the corrugated conduits through an adapter of the plurality of adapters without separating the manifold.

The illustrative examples can be used with any conductor and fiber cables running through a corrugated conduit that includes a split or junction. The illustrative examples are suitable for applications with weight constraints where lightweight tubing is used. The illustrative examples can be used in aircraft, ships, buildings, spacecraft, ergonomics, or other fields in which weight constraints are a concern.

The description of the different illustrative examples has been presented for purposes of illustration and description and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

## Claims

1. A manifold (202, 302, 304, 402, 800, 902) to connect corrugated conduits (228, 230) comprising:
a first half (204, 501, 802, 904);
a second half (206, 503, 804, 906) removably connected to the first half (204, 501, 802, 904) to form a volume (207) within the manifold (202, 302, 304, 402, 800, 902);
a first number of openings (211, 212, 214, 506, 806, 922) on a first end (208, 412, 505) to access the volume (207); and
a second number of openings (213, 216, 512, 518, 808, 810, 916, 918, 920) on a second end (210, 414, 507) to access the volume (207), wherein the first half and the second half are configured such that removing the first half (204, 501, 802, 904) from the second half (206, 503, 804, 906) cleaves each of the first number of openings (211, 212, 214, 506, 806, 922) and each of the second number of openings (213, 216, 512, 518, 808, 810, 916, 918, 920).

2. The manifold (202, 302, 304, 402, 800, 902) of claim 1, wherein the first number of openings (211, 212, 214, 506, 806, 922) comprises locking features (258, 262) configured to retain an adapter (218, 222, 224).

3. The manifold (202, 302, 304, 402, 800, 902) of claim 2, wherein the locking features (258, 262) are non-threaded.

4. The manifold (202, 302, 304, 402, 800, 902) of claim 2 or 3, wherein the locking features (258, 262) are present on both the first half (204, 501, 802, 904) and the second half (206, 503, 804, 906), and wherein the locking features are operational when the first half (204, 501, 802, 904) and the second half (206, 503, 804, 906) are removably connected.

5. The manifold (202, 302, 304, 402, 800, 902) of any one of claims 2-4, wherein the locking features (258, 262) comprise a series of grooves.

6. The manifold (202, 302, 304, 402, 800, 902) of any one of the preceding claims, wherein the first number of openings (211, 212, 214, 506, 806, 922) comprises an anti-rotation feature (256, 260, 814).

7. The manifold (202, 302, 304, 402, 800, 902) of any one of the preceding claims, wherein the manifold (202, 302, 304, 402, 800, 902) comprises a polymer (292); and optionally
wherein the polymer (292) is at least one of transparent or translucent.

8. The manifold (202, 302, 304, 402, 800, 902) of any one of the preceding claims, wherein the manifold (202, 302, 304, 402, 800, 902) comprises a captive fastener system (277); and optionally
wherein the captive fastener system (277) comprises an expandable opening (278, 1006) with an initial diameter (1108) within one of the first half (204, 501, 802, 904) or the second half (206, 503, 804, 906), wherein the expandable opening (278, 1006) is connected to a channel (280, 1104), and wherein the channel (280, 1104) within the first half (204, 501, 802, 904) or the second half (206, 503, 804, 906) has an internal diameter (1110) larger than the initial diameter (1108) and an exit diameter configured to retain a head (1002) of a fastener (276, 1001) inside the channel (280, 1104).

9. A fiber management system (201) comprising:
a manifold (202, 302, 304, 402, 800, 902);
a first number of corrugated conduits (228, 230);
a second number of corrugated conduits (228, 230);
a first number of adapters (218, 222, 224, 410) connecting the first number of corrugated conduits (228, 230) to a first end (208, 412, 505) of the manifold (202, 302, 304, 402, 800, 902); and
a second number of adapters (220, 226, 406, 408) connecting the second number of corrugated conduits (228, 230) to a second end (210, 414, 507) of the manifold (202, 302, 304, 402, 800, 902).

10. The fiber management system (201) of claim 9, wherein each of the first number of adapters (218, 222, 224, 410) comprises a threaded connection (238, 242) and a non-threaded locking feature (240, 244); and optionally
wherein at least one adapter of the first number of adapters (218, 222, 224, 410) comprises a threaded connection (238, 242, 502) with a diameter different than another adapter; and optionally
wherein each non-threaded locking feature (240, 244, 504) comprises a series of grooves.

11. The fiber management system (201) of claim 9 or 10, wherein all adapters of the first number of adapters (218, 222, 224, 410) and the second number of adapters (220, 226, 406, 408) have a same size locking feature (240, 244, 504) configured to interface with the manifold (202, 302, 304, 402, 800, 902).

12. The fiber management system (201) of any one of claims 9-11, wherein the manifold (202, 302, 304, 402, 800, 902) comprises a first half (204, 501, 802, 904); a second half (206, 503, 804, 906) removably connected to the first half (204, 501, 802, 904) to form a volume (207) within the manifold (202, 302, 304, 402, 800, 902); a first number of openings (211, 212, 214, 506, 806, 922) on the first end (208, 412, 505) to access the volume (207); and a second number of openings (213, 216, 512, 518, 808, 810, 916, 918, 920) on a second end (210, 414, 507) to access the volume (207), wherein removing the first half (204, 501, 802, 904) from the second half (206, 503, 804, 906) cleaves each of the first number of openings (211, 212, 214, 506, 806, 922) and each of the second number of openings (213, 216, 512, 518, 808, 810, 916, 918, 920); and optionally
wherein the manifold (202, 302, 304, 402, 800, 902) comprises anti-rotation features configured to restrict movement of the first number of adapters (218, 222, 224, 410) .

13. The fiber management system (201) of any one of claims 9-12, wherein the first number of adapters (218, 222, 224, 410) comprise slots (250, 252); or optionally
further comprising a captive fastener system (277) within the manifold (202, 302, 304, 402, 800, 902).

14. A method (1500) of managing fibers comprising:
separating (1502) a first half (204, 501, 802, 904) of a manifold (202, 302, 304, 402, 800, 902) from a second half (206, 503, 804, 906) of a manifold (202, 302, 304, 402, 800, 902) to cleave each of a first number of openings (211, 212, 214, 506, 806, 922) on a first end (208, 412, 505) of the manifold (202, 302, 304, 402, 800, 902) and each of a second number of openings (213, 216, 512, 518, 808, 810, 916, 918, 920) on a second end (210, 414, 507) of the manifold (202, 302, 304, 402, 800, 902) to provide access to fibers (274) within a volume (207) of the manifold (202, 302, 304, 402, 800, 902) and extending through one of the first number of openings (211, 212, 214, 506, 806, 922) or the second number of openings (213, 216, 512, 518, 808, 810, 916, 918, 920) to corrugated conduits (228, 230) joined by the manifold (202, 302, 304, 402, 800, 902).

15. The method (1500) of claim 14 further comprising:
connecting (1504) the corrugated conduits (228, 230) containing fibers (274) to threaded ends of a plurality of adapters (218, 220, 404); and
removably (1506) connecting the first half (204, 501, 802, 904) of the manifold (202, 302, 304, 402, 800, 902) to the second half (206, 503, 804, 906) of the manifold (202, 302, 304, 402, 800, 902) to restrain locking features of the plurality of adapters (218, 220, 404) within the first number of openings (211, 212, 214, 506, 806, 922) and the second number of openings (213, 216, 512, 518, 808, 810, 916, 918, 920) to join the corrugated conduits (228, 230) to the manifold (202, 302, 304, 402, 800, 902); and optionally
further comprising adding (1508) a fiber into the manifold (202, 302, 304, 402, 800, 902) and one of the corrugated conduits (228, 230) through an adapter of the plurality of adapters (218, 220, 404) without separating the manifold (202, 302, 304, 402, 800, 902).
